Europäisches Patentamt

European Patent Office

Office européen des brevets

(19)

(11) Veröffentlichungsnummer: **0 241 576 B1**

(12) **EUROPÄISCHE PATENTSCHRIFT**

(45) Veröffentlichungstag der Patentschrift: **01.07.92**

(51) Int. Cl.⁵: **H04N 7/12**

(21) Anmeldenummer: **86110640.9**

(22) Anmeldetag: **01.08.86**

(54) Verfahren zur Verringerung der Datenmenge bei der Bildkodierung.

(30) Priorität: **14.03.86 DE 3608491**

(43) Veröffentlichungstag der Anmeldung:
**21.10.87 Patentblatt 87/43**

(45) Bekanntmachung des Hinweises auf die
Patenterteilung:
**01.07.92 Patentblatt 92/27**

(84) Benannte Vertragsstaaten:
**DE FR GB IT NL SE**

(56) Entgegenhaltungen:
**DE-A- 2 835 434**
**DE-A- 3 029 190**
**DE-A- 3 124 653**

(73) Patentinhaber: **ANT Nachrichtentechnik GmbH**
**Gerberstrasse 33**
**W-7150 Backnang(DE)**

(72) Erfinder: **Altes, Harald, Dipl.-Ing.**
**Welzheimer Strasse 9**
**W-7150 Backnang(DE)**

**Beschreibung**

Die Erfindung betrifft ein Verfahren zur Verringerung der Datenmenge bei der Bildkodierung gemäß dem Oberbegriff des Patentanspruches.

Zur Bildkodierung werden Teilbildbereiche einer diskreten Transformation, z.B. der diskreten Cosinus Transformation unterzogen. Die hierdurch erhaltenen Spektralkoeffizienten werden mit vorher bestimmten visuellen Wahrnehmbarkeitsschwellen verglichen. Aus dem Vergleich wird eine Information gewonnen, welche Spektralkoeffizienten übertragen werden müssen und welche vernachlässigt werden können.

Da diese Information je nach quadratischer Teilbildgröße n x n aus einem n x n langen Binärwort besteht, um 2exp [n x n] Kombinationen von Schwellüberschreitungen darstellen zu können, wird durch die Klassifikation die Menge der möglichen Kombinationen auf zum Beispiel 2exp [3] Klassen abgebildet, um diese zusätzliche Datenmenge von einem Bit pro Bildpunkt auf 3 / (n x n) zu reduzieren.

Die Problematik der sehr langen Übertragungszeiten, die sich bei einer Video-Einzelbildübertragung über schmalbandige Übertragungskanäle mit niedrigen Übertragungsraten ergeben, hat in der Literatur zu vielen Vorschlägen geführt, mit denen diese Schwierigkeiten verringert werden können.

Aus IEEE Transactions on Communications, Vol. Com-32, No. 12, December 1984, Seiten 225-232, ist beispielsweise ein Klassifikationsverfahren bekannt, zu dessen Realisierung aber Multiplikationen notwendig sind, so daß der Aufwand dazu beachtlich ist.

Aus der DE-A- 28 35 434 ist ein Verfahren zur Verringerung der Datenmenge bei der Bildkodierung bekannt, bei dem nach einer diskreten Transformation eines Teilbildbereiches in den Spektralbereich alle Spektralkoeffizienten mit vorher bestimmten visuellen Wahrnehmbarkeitsschwellen verglichen werden und aus dem Vergleich die Information gewonnen wird, welche Spektralkoeffizienten übertragen werden müssen und welche vernachlässigt werden können. Das Bild wird dort in Teilbereiche unterteilt. Die Bildinformation jedes Teilbildbereiches wird durch eine diskrete Transformation vom Ortsbereich in den Spektralbereich transformiert. Dann werden diese gewonnenen Spektralwerte mit vorher bestimmten visuellen Wahrnehmbarkeitsschwellen Spektralwert für Spektralwert verglichen. Auf diese binären Vergleichsergebnisse wird ein "Operator" angewendet, der diese Abbildung des matrixförmigen Teilbildbereiches mit einer "Operatormaske" bearbeitet.

Die DE-A- 31 24 653 offenbart ein Verfahren zur Verringerung der Datenmenge bei der Bildkodierung, bei dem nach einer diskreten Transformation eines Teilbildbereiches in den Spektralbereich alle Spektralkoeffizienten mit vorher bestimmten visuellen Wahrnehmbarkeitsschwellen verglichen werden und aus dem Vergleich die Information gewonnen wird, welche Spektralkoeffizienten übertragen werden müssen und welche vernachlässigt werden können.

Auch dort wird das Bild in Teilbildbereiche unterteilt, die nach der Klassifikation jeweils durch eine Klasse charakterisiert werden. Auch wird hierzu die Bildinformation jedes Teilbildbereiches durch eine diskrete Transformation vom Ortsbereich in den Spektralbereich transformiert. Dann werden diese gewonnenen Spektralwerte mit vorher bestimmten visuellen Wahrnehmbarkeitsschwellen Spektralwert für Spektralwert verglichen.

Die binären Vergleichsergebnisse werden als logische 0 oder 1 in einem Schieberegister zwischengespeichert.

Auf diese zwischengespeicherten Vergleichsergebnisse wird ein "Operator" angewendet, der diese Abbildung des matrixförmigen Teilbildbereiches mit einer "Operatormaske" bearbeitet, so daß eine Klassifizierung gefunden ist. Die so gefundene Klasse wird durch einen Klassenkode gekennzeichnet und in dieser Form zur Weiterverarbeitung weitergeleitet.

Der Erfindung liegt die Aufgabe zugrunde, ein Klassifikationsverfahren der oben genannten Art anzugeben, das die Qualität des rekonstruierten Bildsignals nicht subjektiv wahrnehmbar beeinflußt und das mit geringerem Aufwand realisierbar ist, als es bisher möglich war.

Die Aufgabe wird gelöst wie im Patentanspruch beschrieben.

Im folgenden sei die Erfindung anhand von einem Ausführungsbeispiel mit Hilfe von Figuren näher erläutert:

Fig. 1     zeigt ein Blockschaltbild eines Klassifikators.

Fig. 2     zeigt eine mögliche Klasseneinteilung mit 8 Klassen.

Fig. 3     zeigt eine Termeinteilung für die Klasseneinteilung mit 8 Klassen.

Fig. 4     zeigt ein Blockschaltbild für die Realisierung der Operatorfunktion auf die Daten im Maskenschieberegister und für die Termbildung aus den Daten im Termregister für beispielsweise 8 Klassen.

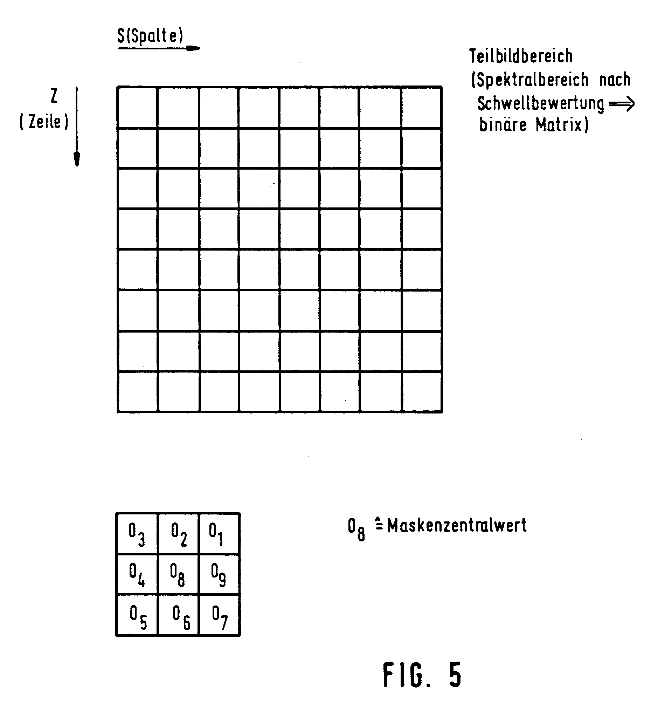

Fig. 5     zeigt die Operatormaske

Fig. 6     zeigt die Überdeckungstabelle der Klassen durch die Termvariablen (Klassen und Terme durch die Termvariablen dargestellt).

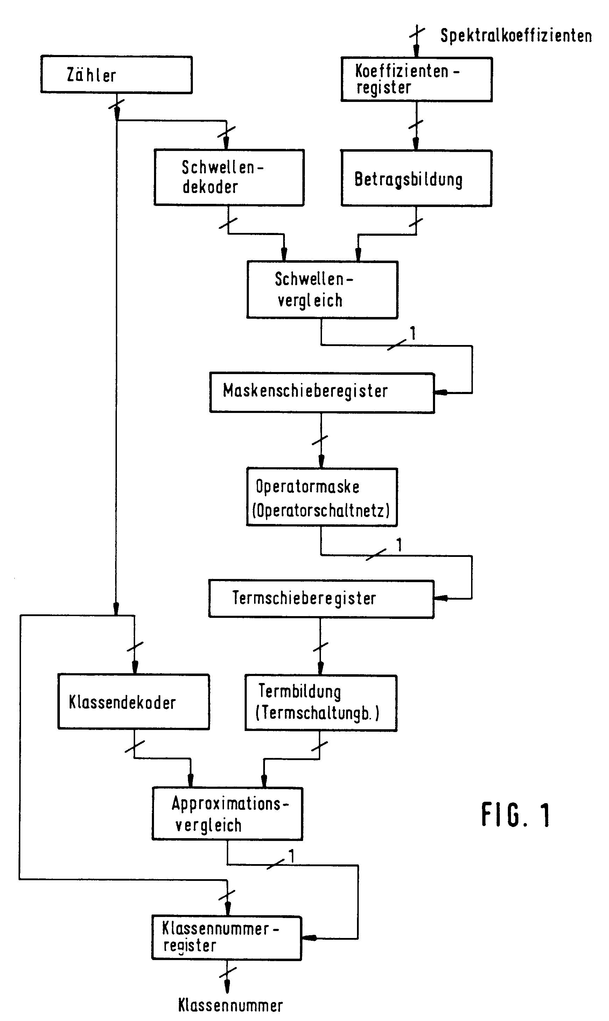

Wie in Figur 1 dargestellt, werden in einem ersten Verarbeitungsabschnitt die durch eine diskrete Transformation ermittelten Spektralkoeffizienten eines Teilbildbereiches nacheinander als Eingabedaten in ein Koeffizientenregister eingeschrieben und ausgewertet.

Von diesem Spektralkoeffizienten wird in einem nachfolgenden Schritt der Betrag gebildet.

Gleichzeitig wird von einem Zähler über seine Zählerposition mit Hilfe eines Schwellendekodierschaltnetzes die zum Betrag des Spektralkoeffizienten gehörende visuelle Wahrnehmbarkeitsschwelle abgeleitet.

Eine Schwellenvergleichsschaltung vergleicht nun den Betrag des Spektralkoeffizienten mit der entsprechenden visuellen Wahrnehmbarkeitsschwelle. Das Vergleichsergebnis liegt dann am Ausgang dieser Schwellenvergleichsschaltung in Form einer logischen 0 oder 1 vor und wird in das Maskenschieberegister eingeschrieben. Dabei bedeutet eine logische 0, daß der Betrag des Spektralkoeffizienten kleiner als seine visuelle Wahrnehmbarkeitsschwelle ist und eine logische 1 entsprechend, daß der Spektralkoeffizient größer als seine visuelle Wahrnehmbarkeitsschwelle ist.

Dieser Vergleich wird für alle Spektralkoeffizienten eines Teilbildbereiches durchgeführt, bis alle Vergleichswerte im Maskenschieberegister eingeschrieben sind, das dann ein Muster der Schwellüberschreitungen enthält.

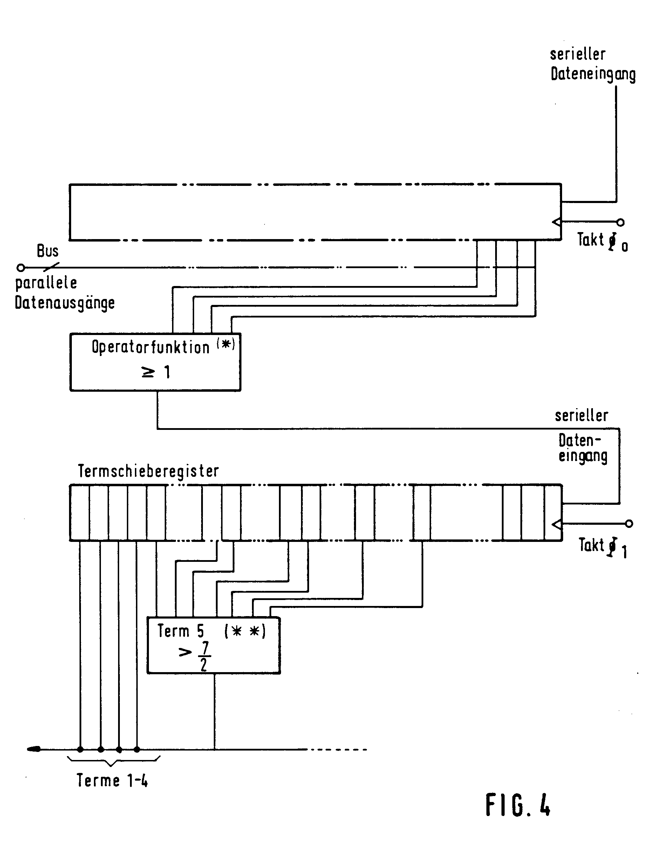

Im zweiten Verarbeitungsschritt wird nun der Inhalt des Maskenschieberegisters unter einer Operatormaske, die acht Werte umfaßt, durchgeschoben (siehe auch Figur 4). Dabei werden pro Maskenverarbeitungsschritt alle 8 Umgebungspunkte eines Maskenzentralwertes gleichgewichtet addiert.

Das Additionsergebnis wird mit einem Schwellwert verglichen und das Ergebnis dieses Vergleiches als neuer Maskenzentralwert mit einer logischen 0 oder 1 anstelle des alten Maskenzentralwertes in einem Termeschieberegister abgespeichert. Auf diese Weise werden singuläre Punkte unterdrückt. Nachdem alle Spektralkoeffizienten unter dieser Maske durchgeschoben sind, ist im Termeschieberegister ein modifiziertes Muster gespeichert.

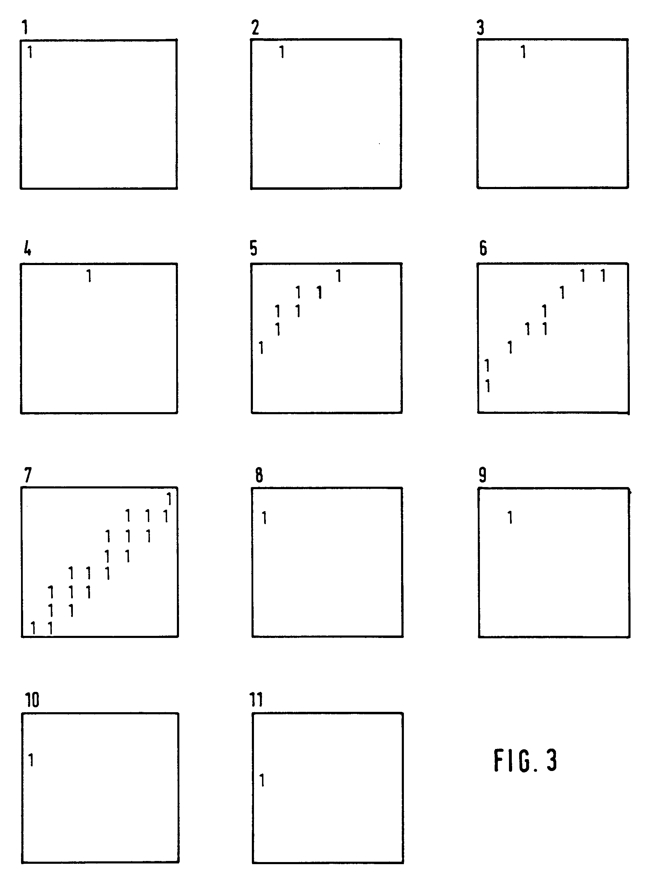

Dieses Muster im Termeschieberegister wird durch das Termeschaltnetz auf die beispielsweise elf verschiedenen Termvariablen (Ts), wie in Figur 3 dargestellt, abgebildet (logisch verknüpft), die den Teilbildbereich durch eine bestimmte Kombination von Termvariablen (Ts) darstellen können.

Die Erzeugung der Termvariablen 1 bis 4 und 5 nach Figur 3 sind in Figur 4 dargestellt, wobei die Termvariablen 1 bis 4 durch direktes Weiterführen des entsprechenden Speicherplatzes des Termeschieberegisters entstehen und die Termvariable 5 durch Verknüpfen der Werte von 7 Termeschieberegisterzellen mit Hilfe einer Majoritätsentscheidung > 7/2 gebildet wird usw. ...

Die Terme Ts wurden aus der Klasseneinteilung Ks erzeugt und sind die minimalen Mengen (kleinste gemeinsame Schnittmengen), aus denen die Klassen zusammengesetzt sind und durch die alle Klassen unterschieden werden können.

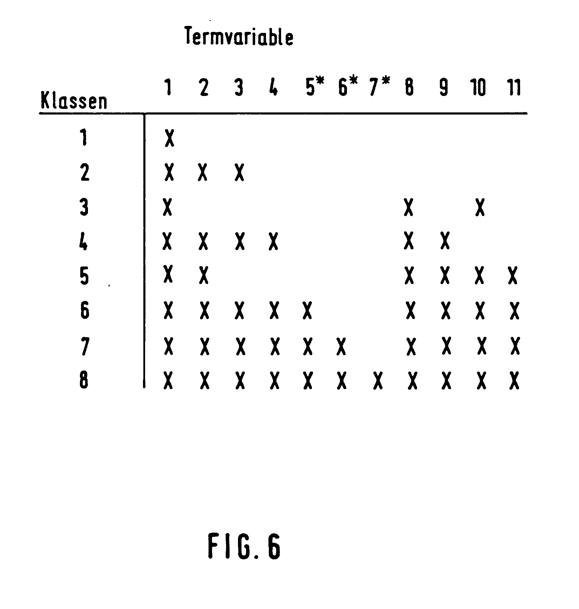

In einem dritten Verarbeitungsschritt werden dann aus dem Zählerstand des Zählers (Figur 1) mit Hilfe eines Klassendekodierschaltnetzes (Klassendekoder, Figur1) die Klassenvariablen (Figur 6) gebildet, die in einem Approximationsschaltnetz mit den Termvariablen in der Weise logisch verglichen werden, daß geprüft wird, ob alle Klassenvariablen die entsprechenden Termvariablen überdecken. Keine Überdeckung liegt dann vor, wenn eine Klassenvariable den logischen Wert 0 besitzt und die entsprechende Termvariable den logischen Wert 1. In allen übrigen Fällen liegt eine Überdeckung vor. Die Überdeckung entspricht der logischen Implikation.

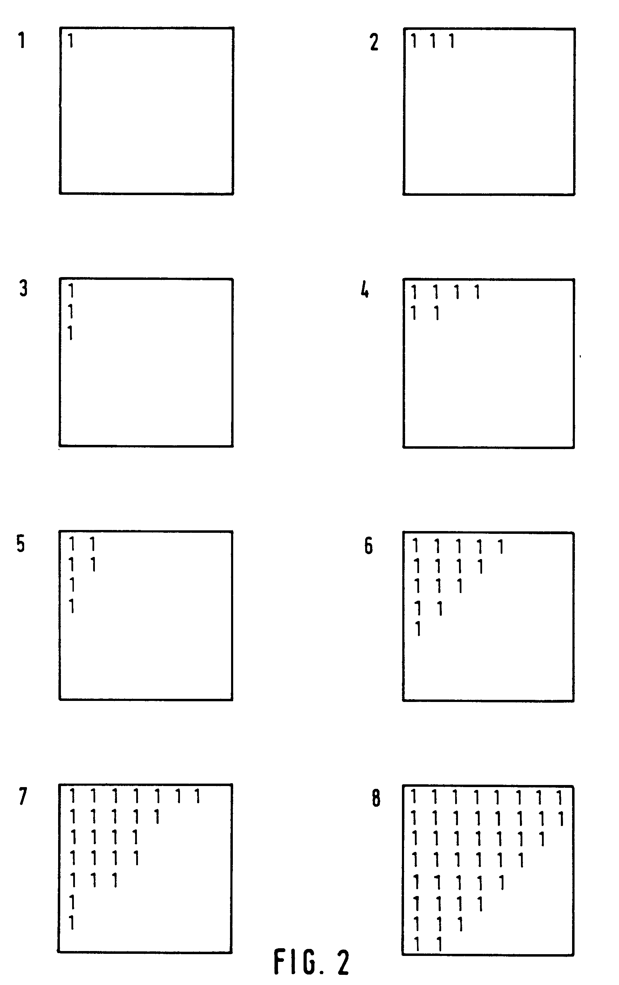

Dieser Approximationsvergleich wird so lange durchgeführt, bis die erste der geordneten Klassen gefunden wurde (Indentität der Klassen- und Termvariablen), die alle Termvariablen überdeckt. Die letzte Klasse überdeckt immer alle Termvariablen, die die Klassen ausschließlich Kombinationen von Termen sind (Figur 2 und 3).

Der Zählerstand, aus dem diese Klasse dekodiert wurde, d.h. der Zählerstand des Schrittes, bei dem eine Klasse gefunden wurde, wird als Klassenkode im Klassennummernregister abgespeichert und als Ausgabedatum zur Weiterverarbeitung bereitgestellt.

## Patentansprüche

1. Verfahren zur Verringerung der Datenmenge bei der Bildkodierung, bei dem nach einer diskreten Transformation eines Teilbildbereiches in den Spektralbereich alle Spektralkoeffizienten mit vorher bestimmten visuellen Wahrnehmbarkeitsschwellen verglichen werden und aus dem Vergleich die Information gewonnen wird, welche Spektralkoeffizienten übertragen werden müssen und welche vernachlässigt werden können,

   - wobei das Bild in Teilbildbereiche unterteilt wird, die nach einer Klassifikation jeweils durch eine Klasse von Spektralkoeffizienten charakterisiert werden,
   - wobei zur Klassifikation die Bildinformation dieses Teilbildbereiches durch eine diskrete Transformation vom Ortsbereich in den Spektralbereich transformiert wird,
   - wobei diese gewonnenen Spektralwerte mit vorher bestimmten visuellen Wahrnehmbarkeitsschwellen Spektralwert für Spektralwert verglichen werden,
   - wobei die binären Vergleichsergebnisse als logische 0 oder 1 seriell in einem Schieberegister (Maskenschieberegister) zwischengespeichert werden, dessen Inhalt unter einer Operatormaske durchgeschoben wird, um eine Klasse zu finden, die dann mit einem Klassenkode für eine Weiterverarbeitung gekennzeichnet wird, dadurch gekennzeichnet,

- daß die auf das Schieberegister folgende Operatormaske alle Umgebungspunkte um einen Maskenzentralwert miteinander addiert,

- daß das Additionsergebnis mit einem Schwellwert verglichen wird und das Ergebnis dieses Vergleiches als neuer Maskenzentralwert mit einer logischen 0 oder 1 anstelle des alten Maskenzentralwertes in einem Termeschieberegister abgespeichert wird,

- daß das im Termeschieberegister abgespeicherte Muster in einem Termeschaltnetz zu Termvariablen verknüpft wird, wobei diese Verknüpfung zumindest für eine Termvariable im Sinne einer Majoritätsentscheidung vorgenommen wird,

- daß die Klassen, zu denen die Spektralkoeffizienten für jeden Teilbildbereich zusammengefaßt sind, ausgewählte Kombinationen der Terme darstellen, und

- daß die aus den Termvariablen verknüpften Terme mit den Klassenvariablen, die aus der Verknüpfung eines Zählerstandes eines Zählers mittels eines binären Klassendecodier- Schaltnetzes gewonnen werden, so lange miteinander verglichen werden, bis eine Klasse gefunden ist, die alle Terme an jeder Binärstelle überdeckt (logische Implikation) und welche dann mit dem Klassenkode für die Weiterverarbeitung gekennzeichnet wird.

## Claims

1. A method of reducing the quantity of data in image coding, wherein, after discrete transformation of a partial image region into the spectral domain, all spectral coefficients are compared with previously determined visual discernibility thresholds and the comparison result furnishes the information as to which spectral coefficients must be transmitted and which may be neglected,

   - wherein the image is subdivided into partial image regions which, after classification, are each characterised by one class of spectral coefficients;

   - wherein, for the purpose of classification, the image information of this partial image region is transformed by discrete transformation from the local domain into the spectral domain;

   - wherein the resulting spectral values are compared, spectral value by spectral value, with previously determined visual discernibility thresholds;

   - wherein the binary comparison results are intermediately stored serially as logic 0 or logic 1 in a shift register (mask shift register) whose contents are pushed through underneath an operator mask in order to find a class which is then identified by a class code for further processing, characterised in that

   - the operator mask following the shift register adds up all points surrounding a central mask value;

   - the result of the addition is compared with a threshold value and the result of this comparison is stored in a term shift register as a new central mask value instead of the old central mask value in the form of a logic 0 or 1;

   - in a term gate array, the pattern stored in the term shift register is linked into term variables, with this linkage being made at least for one term variable in the sense of a majority decision;

   - the classes in which the spectral coefficients are combined for each partial image region constitute selected combinations of the terms; and

   - the terms linked together from the term variables are compared with the class variables obtained from the linkage of the counter position of a counter by means of a binary class decoder gate array until a class has been found which covers all terms at each binary location (logic implication) and which then is identified for further processing by a class code.

## Revendications

1. Procédé de réduction de la quantité de données dans le codage des images, où, après transformation discrète d'une partie de l'image dans le domaine spectral, tous les coefficients spectraux sont comparés à des seuils de perceptibilité visuelle préalablement déterminés et où le résultat de cette comparaison fournit l'information sur les coefficients spectraux qui doivent être transmis et sur ceux qui peuvent être négligés,

   - où l'image est subdivisée en parties qui, après classification, sont caractérisées par une classe de coefficients spectraux,

   - où, pour la classification, les informations visuelles de cette partie d'image sont transformées par une transformation discrète de données de lieu chromatique en données de domaine spectral,

- où les valeurs spectrales ainsi obtenues sont comparées, valeur spectrale après valeur spectrale, avec des seuils de perceptibilité visuelle préalablement déterminés,
- où les résultats binaires des comparaisons sont temporairement mémorisés sous la forme de 0 ou de 1 logiques inscrits en série dans un registre à décalage (registre à décalage des masques) dont le contenu est passé sous un masque d'opérateur afin de trouver une classe qui est ensuite caractérisée par un code de classe pour la suite du traitement,

caractérisé en ce que

- le masque d'opérateur appliqué au registre à décalage additionne ensemble tous les points environnants se trouvant autour d'une valeur centrale du masque,
- le résultat de l'addition est comparé à une valeur de seuil et le résultat de cette comparaison est mémorisé dans un registre à décalage de termes comme nouvelle valeur centrale du masque, sous la forme d'un 0 ou d'un 1 logique, à la place de l'ancienne valeur du masque,
- le motif stocké dans le registre à décalage de termes est combiné logiquement dans un réseau de termes pour former des variables de terme, cette combinaison logique étant effectuée au moins pour une variable de terme sous la forme d'une décision majoritaire,
- les classes dans lesquelles sont regroupés les coefficients spectraux pour chaque partie d'image représentent des combinaisons sélectionnées des termes,
- les termes combinés à partir de variables de terme sont comparés aux variables de classe, qui sont obtenues par la combinaison logique de la valeur d'un compteur dans un réseau binaire de décodage des classes, jusqu'à ce qu'une classe soit trouvée qui se superpose (implication logique) à tous les termes en tous les points binaires, qui est ensuite représentée par le code de classe pour la suite du traitement.

EP 0 241 576 B1

Spektralkoeffizienten

Zähler

Koeffizientenregister

Schwellendekoder

Betragsbildung

Schwellenvergleich

1

Maskenschieberegister

Operatormaske
(Operatorschaltnetz)

1

Termschieberegister

Klassendekoder

Termbildung
(Termschaltungb.)

Approximationsvergleich

FIG. 1

1

Klassennummerregister

Klassennummer

6

FIG. 2

FIG. 3

serieller
Dateneingang

Takt $\phi_0$

Bus

parallele
Datenausgänge

Operatorfunktion (*)

$\geq 1$

serieller

Dateneingang

Termschieberegister

Takt $\phi_1$

Term 5  (* *)

$> \dfrac{7}{2}$

Terme 1-4

FIG. 4

S(Spalte)

Z
( Zeile )

Teilbildbereich
(Spektralbereich nach
Schwellbewertung ⟹
binäre Matrix)

| $0_3$ | $0_2$ | $0_1$ |
|-------|-------|-------|
| $0_4$ | $0_8$ | $0_9$ |
| $0_5$ | $0_6$ | $0_7$ |

$0_8$ ≙ Maskenzentralwert

# FIG. 5

Termvariable

| Klassen | 1 | 2 | 3 | 4 | 5* | 6* | 7* | 8 | 9 | 10 | 11 |
|---|---|---|---|---|---|---|---|---|---|---|---|
| 1 | X | | | | | | | | | | |
| 2 | X | X | X | | | | | | | | |
| 3 | X | | | | | | | X | | X | |
| 4 | X | X | X | X | | | | X | X | | |
| 5 | X | X | | | | | | X | X | X | X |
| 6 | X | X | X | X | X | | | X | X | X | X |
| 7 | X | X | X | X | X | X | | X | X | X | X |
| 8 | X | X | X | X | X | X | X | X | X | X | X |

FIG. 6